# EUROPEAN PATENT APPLICATION

(11) **EP 4 769 387 A1**
(43) Date of publication of application: **01.07.2026**
(21) Application number: 25226374.4
(22) Date of filing: 22.12.2025
(51) Int. Cl.: G10L 15/20, G10L 21/02, G10L 21/0208, G10L 15/07

(54) **VOICE SIGNAL COMPENSATION FOR MASK-WEARING SPEAKERS**

(30) Priority: 27.12.2024 US 202463739438 P; 12.05.2025 US 202519204966
(71) Applicant: Harman Becker Automotive Systems, Inc., Novi, MI 48377 (US)
(72) Inventor: CHEN, Zhijun, Novi, MI, 48377 (US); LU, Yuesheng, Novi, MI, 48377 (US)
(74) Representative: Rummler, Felix

(57) **Abstract**

In various embodiments, a computer-implemented method comprises determining, by a voice recognition system included in a vehicle, a mask type of a mask worn by an occupant of the vehicle, acquiring a compensation curve corresponding to the mask type, acquiring an audio signal of the occupant speaking, and applying the compensation curve to the audio signal to generate a compensated audio signal.

## Description

### CROSS-REFERENCE TO RELATED APPLICATIONS

This application claims priority benefit of United States Provisional Patent Application titled, "Voice Recognition for Users Wearing Masks," filed on December 27, 2024, and having Serial No. 63/739,438. The subject matter of this related application is hereby incorporated herein by reference.

### BACKGROUND

### Field of the Various Embodiments

This application is directed to computing devices and, more specifically, to voice signal compensation for mask-wearing speakers.

### Description of the Related Art

Virtual personal assistants (or "VPAs") have recently increased in popularity. In particular, demand for devices equipped with virtual personal assistant capability has grown, due at least in part to the capability of these devices to perform various tasks and fulfill various requests according to user direction. In a typical application, a virtual personal assistant is employed in conjunction with a vehicle. A vehicle speaks to the virtual personal assistant to trigger the virtual personal assistant to initiate an operation, such as placing a phone call, beginning a navigation sequence, or playing a music track. The virtual personal assistant performs voice recognition on the speech made by the vehicle occupant to identify keywords and responds to the identified keywords by performing the operation specified in the speech.

One drawback with conventional virtual personal assistants, however, is that the virtual personal assistant has difficulty processing the speech made by vehicle occupants in non-ideal environments. For example, the conventional virtual personal assistant is trained to accurately identify words based on speech signals made by speakers that provide clear, unobstructed speech. However, many vehicle occupants do not provide such clear speech. For example, many jurisdictions require vehicle occupants to wear protective masks over the mouth and nose area for safety reasons. As a result, vehicle occupants wear masks that muffle their speech, degrading the accuracy of the conventional virtual personal assistant when performing voice recognition and thus reducing the responsiveness of the conventional virtual personal assistant to speech commands made by vehicle occupants. Some conventional virtual personal assistants include user-based training that includes training for specific configurations, including a given user wearing a mask. However, such training is time-consuming and cumbersome, as the training requires a large amount of training data, and the training remains effective only when the given user wears the same type of mask while in the vehicle. Consequently, vehicle occupants have refrained from using conventional personal assistants in the vehicle when wearing masks or other clothing that alters speech.

As the foregoing illustrates, what is needed in the art are more effective techniques for interacting with virtual personal assistants.

### SUMMARY

In various embodiments, a computer-implemented method comprises determining, by a voice recognition system included in a vehicle, a mask type of a mask worn by an occupant of the vehicle, acquiring a compensation curve corresponding to the mask type, acquiring an audio signal of the occupant speaking, and applying the compensation curve to the audio signal to generate a compensated audio signal.

At least one technical advantage of the disclosed techniques relative to the prior art is that, with the disclosed techniques, a virtual personal assistant can process the speech of vehicle occupants more accurately when the occupant is wearing an article of clothing that muffles their speech. In particular, by incorporating a calibration application that processes images to identify a specific mask type worn by the occupant, the virtual personal assistant can apply energy in specific frequency ranges based on the specific mask type. In this manner, the compensated speech is easier for the virtual personal assistant to process accurately, generating speech text that the virtual personal assistant can process with greater accuracy. Consequently, the virtual personal assistant responds to the speech of a mask wearing occupant with more accuracy and does not require the virtual personal assistant to be specifically trained to recognize the speech of a mask wearer or require the occupant to remove their mask when speaking. These technical advantages represent one or more technological advancements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a block diagram of a voice recognition system configured to implement one or more aspects of the present disclosure.
Figure 2 illustrates the operation of the calibration application of Figure 1 training a classification machine learning model;
Figure 3 illustrates the operation of the calibration application of Figure 1 generating a mask compensation curve for a mask type, according to various embodiments;
Figure 4 illustrates the voice recognition system of Figure 1 generating speech text from an audio signal generated by a vehicle occupant, according to various embodiments; and
Figure 5 is a flow diagram of method steps for processing an audio signal using a compensation curve, according to various embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

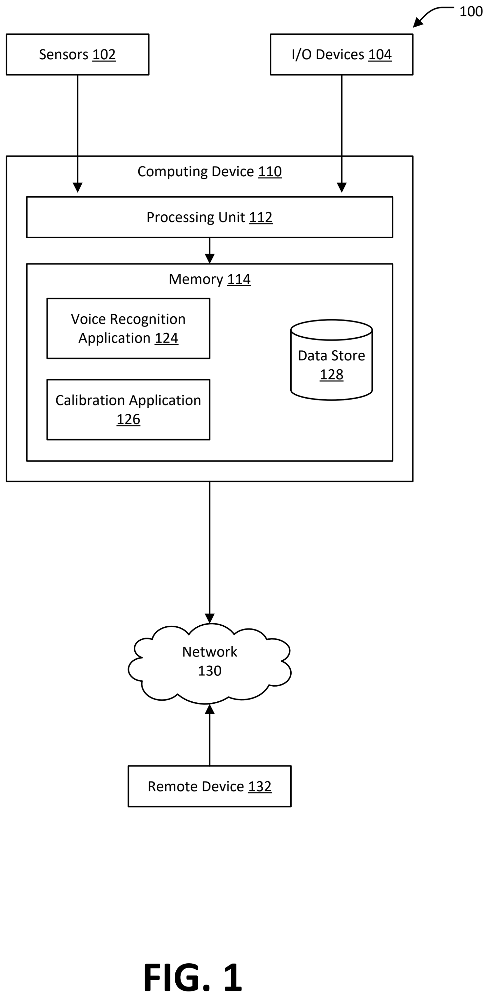

Figure 1 illustrates a block diagram of a voice recognition system 100 configured to implement one or more aspects of the present disclosure. As shown, the voice recognition system 100 includes, without limitation, one or more sensors 102, one or more input/output (I/O) devices 104, a computing device 110, a network 130, and a remote device 132. The computing device 110 includes, without limitation, a processing unit 112 and memory 114. The memory 114 includes, without limitation, a voice recognition application 124, a calibration application 126, and a data store 128.

In operation, the computing device 110 receives sensor data from the sensors 102. The sensor data includes image data associated with the face of a human, such as an occupant of a vehicle that includes the voice recognition system 100. The sensor data also includes audio data, including an audio signal generated from speech made by the occupant and acquired by the one or more sensors 102. The processing unit 112 executes the calibration application 126 to determine whether the occupant is wearing a mask and, if so, the mask type the occupant is wearing. The calibration application 126 retrieves a mask compensation curve corresponding to the mask type. The mask compensation curve specifies varying quantities of spectral energy over a series of frequency bands. The calibration application 126 transmits the mask compensation curve to the voice recognition application 124. The processing unit 112 executes the voice recognition application 124 to perform frequency compensation on the audio signal by adding the mask compensation curve to the audio signal to generate a compensated audio signal. The compensated audio signal has greater spectral energy across one or more frequency bands compared to the audio signal. The voice recognition application 124 performs speech recognition on the compensated audio signals to identify one or more words included in the speech of the occupant. The one or more words are usable by the voice recognition system 100 or another device or system for response to the words, further natural language processing, etc.

The one or more sensors 102 can include one or more devices that perform measurements and/or acquire data related to subjects in an environment. In various embodiments, the one or more sensors 102 can generate sensor data that is related to one or more humans and/or objects within the environment. For example, the one or more sensors 102 can collect various types of sensor data related to occupants of a vehicle (e.g., presence, height, location, head orientation, etc.), as well as other sensor data, such as biometric data (e.g., heart rate, brain activity, skin conductance, blood oxygenation, pupil size, galvanic skin response, blood-pressure level, average blood glucose concentration, etc.). Additionally or alternatively, the one or more sensors 102 can generate sensor data related to objects in the environment that are not the vehicle occupants. For example, the one or more sensors 102 could generate sensor data about the operation of a vehicle, including the state of one or more turn signals, the speed of the vehicle, the ambient temperature in the vehicle, the amount of light within the vehicle, compartment temperature, and so forth. In some embodiments, the one or more sensors 102 can be coupled to and/or included within the computing device 110 and send the sensor data to the processing unit 112. The processing unit 112 executes the voice recognition application 124 and/or the calibration application 126 to process the sensor data and identify speech made by one or more vehicle occupants.

In various embodiments, the one or more sensors 102 can include optical sensors, such as RGB cameras, infrared cameras, depth cameras, and/or camera arrays, which include two or more of such cameras. Other optical sensors can include imagers and laser sensors. In addition, in various embodiments, the one or more sensors 102 can include acoustic sensors, such as a microphone and/or a microphone array of multiple microphones that acquire sound data. In some embodiments, the one or more sensors 102 can include other types of sensors, including physical sensors, such as touch sensors, pressure sensors, position sensors (e.g., an accelerometer and/or an inertial measurement unit (IMU)), motion sensors, and so forth, that register the body position and/or movement of one or more users. In such instances, the voice recognition system 100 can process the acquired sensor data to indicate the presence and/or the position of a vehicle occupant.

As noted above, computing device 110 can include the processing unit 112 and the memory 114. The computing device 110 can be a device that includes one or more processing units 112, such as a system-on-a-chip (SoC). In various embodiments, computing device 110 can be a mobile computing device, such as a tablet computer, mobile phone, media player, and so forth. In some embodiments, the computing device 110 can be a head unit included in a vehicle system. Generally, the computing device 110 can be configured to coordinate the overall operation of the voice recognition system 100. The embodiments disclosed herein contemplate any technically feasible system configured to implement the functionality of the voice recognition system 100 via computing device 110.

Various examples of the computing device 110 include mobile devices (e.g., cellphones, tablets, laptops, etc.), wearable devices (e.g., watches, rings, bracelets, headphones, etc.), consumer products (e.g., gaming, gambling, etc.), smart home devices (e.g., smart lighting systems, security systems, digital assistants, etc.), communications systems (e.g., conference call systems, video conferencing systems, etc.), cockpit domain controllers (CDCs), high-performance compute (HPC) units, zonal electronic control units (ECUs), and so forth. The computing device 110 can be located in various environments including, without limitation, road vehicle environments (e.g., consumer car, commercial truck, etc.), aerospace and/or aeronautical environments (e.g., airplanes, helicopters, spaceships, etc.), nautical and submarine environments, and so forth. Accordingly, the computing device 110 can execute the calibration application 126 and/or the voice recognition application 124 to process a wide range of voice signals in a wide range of environments. For example, the computing device 110 can be included in a smart home device to process the speech of a user in a room of a house.

The processing unit 112 can include a central processing unit (CPU), a digital signal processing unit (DSP), a microprocessor, an application-specific integrated circuit (ASIC), a neural processing unit (NPU), a graphics processing unit (GPU), a field-programmable gate array (FPGA), and so forth. The processing unit 112 generally comprises a programmable processor that executes program instructions to manipulate input data. In some embodiments, the processing unit 112 can include any number of processing cores, memories, and other modules for facilitating program execution. For example, the processing unit 112 could receive input from a user via the I/O devices 104 and generate pixels for display on the I/O device 104 (e.g., a display device).

The memory 114 can include a memory module or collection of memory modules. The memory 114 generally comprises storage chips such as random-access memory (RAM) chips that store application programs and data for processing by the processing unit 112. In various embodiments, the memory 114 can include non-volatile memory, such as optical drives, magnetic drives, flash drives, or other storage. In some embodiments, separate data stores, such as data store (not shown) included in the network 130 ("cloud storage") can supplement the memory 114. In some embodiments, one or more services or modules, such as one or more trained machine learning (ML) models, lookup tables, and/or mask compensation curves, are stored in the data store 128. The voice recognition application 124 and/or the calibration application 126 within the memory 114 can be executed by the processing unit 112 to implement the overall functionality of the computing device 110 and, thus, to coordinate the operation of the voice recognition system 100 as a whole.

The voice recognition application 124 receives and processes sensor data acquired by the one or more sensors to process audio data to detect one or more words included in the speech made by a human. For example, when the voice recognition system 100 acquires audio data inside the cabin of a vehicle, the voice recognition application 124 receives an audio signal corresponding to audio data acquired by the one or more sensors 102. The voice recognition application 124 performs one or more algorithms to process the audio signal and identify one or more words included in the audio signal. As discussed in greater detail below, the voice recognition application 124 executes speech recognition on a given audio signal to identify one or more words and generate a speech text corresponding to the one or more identified words.

In various embodiments, the voice recognition application 124 modifies the audio signal before performing the speech recognition. For example, when the calibration application 126 determines that the occupant is wearing a mask, the calibration application 126 transmits a mask compensation curve for use by the voice recognition application to perform frequency compensation. In such instances, the voice recognition application 124 can increase the energy of the audio signal by applying the mask compensation curve, increasing the energy included in the audio signal. The additional energy provided by the mask compensation curve enables the voice recognition application 124 to process and interpret the audio signal easier and identify words within the audio signal with more accuracy.

The calibration application 126 controls the transmission of mask compensation curves to the voice recognition application 124 for use in speech recognition. In various embodiments, the calibration application processes images acquired by the one or more sensors 102 to determine whether an occupant is wearing a mask. In such instances, the calibration application identifies the type of mask the occupant is wearing and retrieves a mask compensation curve that corresponds to the identified mask type. In various embodiments, the calibration application 126 processes image data acquired by the one or more sensors 102 to identify the mask type. For example, the calibration application 126 can include a trained machine learning (ML) model that makes classifications based on an input image. In such instances, the ML model outputs a classification specifying (i) whether the human in the image is wearing a mask, and (ii) when the human is wearing a mask, the type of mask (or masks) being worn.

In some embodiments, the calibration application 126 also includes a mask compensation curve table; alternatively, the data store 128 can include the mask compensation curve table. The calibration application 126 can refer to the mask compensation curve table to identify a mask compensation curve that corresponds to the mask type the human is wearing. The calibration application 126 refers to the mask compensation curve table to identify the appropriate mask compensation curve to retrieve based on the mask being worn and transmits the mask compensation curve to the voice recognition application 124 for use in frequency compensation.

The one or more I/O devices 104 can include devices capable of receiving input, such as a keyboard, a mouse, a touch-sensitive screen, a microphone, and/or other input devices for providing input data to the computing device 110. In various embodiments, the one or more I/O devices 104 can include devices capable of providing output, such as a display screen, loudspeakers, haptic actuators, and the like. One or more of the I/O devices 104 can be incorporated in computing device 110 or can be external to computing device 110. In some embodiments, the computing device 110 and/or the one or more I/O device(s) 104 can be components of an ADAS.

The network 130 can enable communications between the computing device 110 and other devices in network via wired and/or wireless communications protocols, including Bluetooth, Bluetooth low energy (BLE), wireless local area network (WiFi), cellular protocols, satellite networks, V2V and/or V2X networks, and/or near-field communications (NFC). In some embodiments, the network 130 can be a vehicle audio network (e.g., a Media-Oriented Systems Transport (MOST), an Intelligent Network Interface Controller (INIC) network ("INICnet"), an Automotive Audio Bus (A2B) network, an Ethernet to Edge Bus (E2B), etc.). Additionally, or alternatively, the network 130 can be a vehicle network (e.g., a controller area network (CAN), a FlexRay network, a Clock Extension Peripheral Interface (CXPI) network, an Ethernet network, a Local Interconnect Network (LIN), etc.). In various embodiments, the network 160 can include one or more data stores 128 that store data associated with sensor data, biometric values, etc. In various embodiments, the computing device 110 can retrieve information from the data store 128.

The remote device 132 is a computing device, such as a laptop, tablet, smart phone, cellular phone, desktop, teleconferencing system, etc., that communicates with the computing device 110. In some embodiments, the remote device 132 can include an instance of the calibration application 126. Additionally or alternatively, the remote device 132 can include other devices or modules, such as one or more trained ML models that have been trained to identify mask types based on a dataset of images. In such instances, the calibration application 126 executing on the computing device 110 can receive the one or more trained ML models via the network 130.

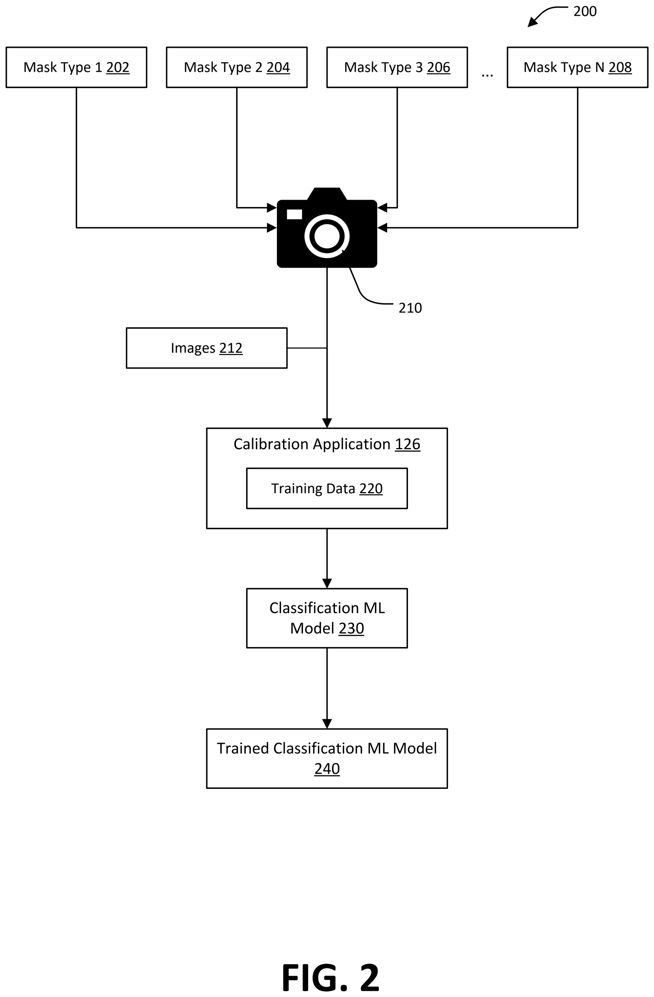

Figure 2 illustrates the operation 200 of the calibration application 126 of Figure 1 training a classification machine learning model 230, according to various embodiments. As shown, the operation 200 includes, without limitation, a plurality of mask types 202-208, a camera 210, a plurality of images 212, the calibration application 126, training data 220, a classification machine learning (ML) model 230, and a trained classification ML model 240.

In operation, the calibration application 126 receives and/or retrieves a plurality of images 212 that the camera 210 acquires. For each of the respective mask types 202-208, the camera 210 acquires one or more images of one or more humans wearing the mask type (e.g., the mask type 1 202). The calibration application 126 receives a plurality of images for each of the mask types 202-208 and aggregates the plurality images 212 into training data 220. The calibration application 126 inputs the training data 220 into a classification ML model 230 to train the classification ML model 230 to process images and accurately determine whether a human within a given image is wearing as mask, as well as a specific mask type the human is wearing when the human is wearing a mask.

In various embodiments, the calibration application 126 trains a machine learning model to detect whether a human in an environment is wearing a mask. In some embodiments, the calibration application 126 is included in the remote device 132 and is separate from the vehicle. In such instances, the calibration application 126 can train the classification ML model 230 prior to use in a vehicle (e.g., prior to manufacturing the vehicle and/or the voice recognition system 100). The remote device 132 can then store the trained classification ML model 240 and can subsequently transmit the trained classification ML model 240 to the computing device 110 for later use.

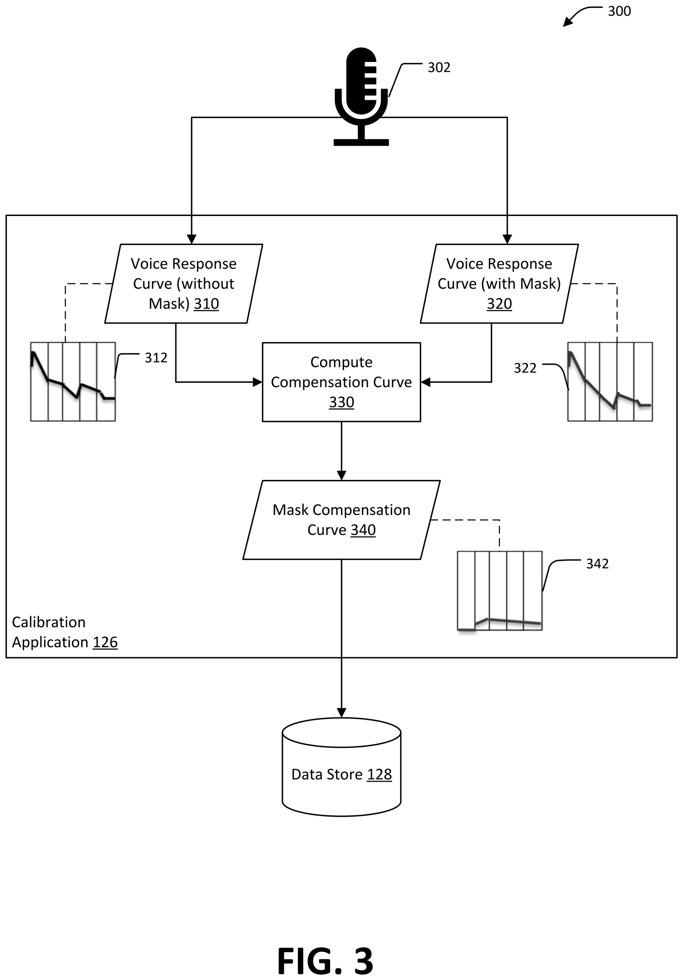

Alternatively, in some embodiments, the calibration application 126 is included in a vehicle and acquires the plurality of images when an occupant initiates a mask detection calibration. For example, when a vehicle occupant wears a homemade or custom mask, the vehicle occupant can initiate the mask detection calibration to increase the accuracy of the trained classification ML model 240 of identifying the homemade or custom mask being worn. As will be discussed further in relation to Figure 3, in some embodiments, the mask detection calibration triggers the calibration application 126 to add a new mask compensation curve to correspond with the new mask type.

The mask types 202-208 can include various classes of wearable objects (e.g., face masks, respirators, scarves, etc.) that are configured to be worn over the nose and/or mouth area of a human. For example, the mask type 1 202 can refer to a reusable cloth mask, the mask type 2 204 can refer to a disposable procedure mask (e.g., surgical masks, medical procedure masks, etc.), the mask type 3 206 can refer to a respirator (e.g., particulate filtering respirators), and the mask type N 208 (where N is a value of 4 or higher) can be a scarf. In various embodiments, the calibration application 126 causes the camera 210 to capture one or more images of a human wearing one specific mask type and identify the specific mask type being worn. In some embodiments, a human is wearing multiple masks (e.g., wearing a stack of a cloth mask and a disposable procedure mask, wearing a stock of a disposable procedure mask and a respirator, etc.). In such instances, the camera 210 acquires a plurality of images of the human wearing multiple masks and the calibration application 126 trains the classification ML model 230 to identify each of the multiple masks that the human is wearing.

The calibration application 126 generates a set of training data 220 from the plurality of images 212 transmitted from the camera. In various embodiments, the training data 220 includes at least one image for each mask type 202-208 and/or a unique identifier for each mask type 202-208. In such instances, the calibration application 126 can train the classification ML model 230 by inputting training data 220 into the classification ML model 230 and providing feedback on the output the classification ML model 230 provides. In some embodiments, the training data 220 includes aggregated pluralities of images 212, where the images are acquired by multiple remote cameras (not shown) of varying humans wearing or not wearing one of the mask types 202-208. In such instances, the calibration application 126 can aggregate the multiple sets of images 212 over a time period to generate the training data 220.

The classification ML model 230 is a machine learning model and/or neural network (NN) that generates an output classifying an input based on one or more criteria. In various embodiments, the classification ML model 230 is an ML model that is at least partially trained to process input images and output a classification based on the contents of the images. In such instances, the classification ML model 230 can be previously trained using a separate dataset of images associated with humans and/or clothing. The classification ML model 230 thus can have been previously trained to detect whether a human is present in an image and/or whether a human is wearing clothing or a particular type of clothing (e.g., wearing face coverings). In some embodiments, the classification ML model 230 can be based on a convolutional NN model (e.g., a Visual Geometry Group (VGG) model) that is capable of performing image recognition.

The calibration application 126 trains the classification ML model 230 based on the training data 220 that includes the plurality of images 212. For example, the training data 220 can include images of a human wearing the mask type 1 202 and the same human not wearing the mask type 1 202. The classification ML model 230 can analyze patterns based on the training data 220 to classify images based on whether the human is wearing a mask or is not wearing a mask. Additionally or alternatively, in various embodiments, the training data 220 can include images of a human wearing the mask type 1 202, the same human wearing the mask type 2 204, etc. The classification ML model 230 can analyze patterns based on the training data 220 to classify images based on whether the human is wearing the mask type 1 202, same human wearing the mask type 2 204, and so forth. In some embodiments, the calibration application 126 receives the output generated by the classification ML model 230 and provides feedback that validates the output or rejects the output. In such instances, the calibration application 126 can repeatedly input the training data 220 and provide feedback on the outputs until the trained classification ML model 230 provides a threshold accuracy level (e.g., outputting an accurate classification over a 0.95 threshold). Upon generating the trained classification ML model 240, the calibration application 126 can cause the trained classification ML model 240 to be stored in the data store 128 of the computing device 110.

Figure 3 illustrates the operation 300 of the calibration application 126 of Figure 1 generating a mask compensation curve 340 for a mask type, according to various embodiments. As shown, the operation 300 includes, without limitation, a microphone 302, the calibration application 126, and the data store 128. The calibration application 126 includes, without limitation, a plurality of voice response curves 310, 320, a plurality of spectral energy graphs 312, 322, 342, a compute compensation curve action 330, and a mask compensation curve 340.

The calibration application 126 controls a calibration operation to generate one or more mask compensation curves 340 (e.g., 340(1), 340(2), etc.), where a given mask compensation curve 340 corresponds to a specific mask type (e.g., the mask compensation curve 340(1) corresponding to the mask type 1 202). During the operation 300, the microphone 302 acquires a plurality of recordings of a human. The microphone 302 transmits the plurality of recordings to the calibration application 126 for processing. One of the plurality of recordings is represented as a first voice response curve 310, which the microphone 302 recorded of the human speaking without wearing a mask. Another one of the plurality of recordings is represented as a second voice response curve 320, which the microphone 302 recorded of the human speaking while wearing a mask (e.g., the mask type 1 202). The calibration application 126 performs the compute compensation curve action 330 to generate the mask compensation curve 340 based on a combination of the voice response curves 310, 320. The calibration application 126 can then store the mask compensation curve 340 in the data store 128 for later transmittal to the voice recognition application 124.

In various embodiments, the calibration application 126 receives recordings transmitted by the microphone 302. A human (e.g., a human tester and/or a testing device performing the calibration) speaks without wearing any mask. The calibration application 126 receives a first set of recordings and generates the first voice response curve 310. In various embodiments, the calibration application 126 can generate the first voice response curve 310 based on one or more recordings the human made without wearing any mask. Similarly, the human speaks while wearing a specific mask type or specific combination of mask types (e.g., wearing a stack of the mask type 1 202 and the mask type 2 204). The calibration application 126 receives a second set of recordings and generates the second voice response curve 320. In various embodiments, the calibration application 126 can generate the second voice response curve 320 based on one or more recordings the human made while wearing the specific mask type or combination of mask types.

The first voice response curve 310 is represented by the spectral energy graph 312, where the power spectral density (PSD) is mapped over multiple frequencies. For example, the spectral energy graph 312 displays the PSD over a series of frequency bands that correspond to the frequency range of human speech. Similarly, the second voice response curve 320 is represented by the spectral energy graph 322, where the PSD is mapped over the same frequency range. Compared to the spectral energy graph 312, the spectral energy graph for the second voice response curve 320 contains less PSD over the same frequency range, as the mask worn by the human muffles the speech of the human and thus lowers the spectral energy of the audio signal acquired by the microphone 302. As a result, the lower amount of PSD in the second voice response curve 320 lowers the accuracy of the voice recognition application 124 when attempting to identify words during speech recognition.

To address the issue of the lower PSD in the second voice response curve 320, the calibration application 126 performs the compute compensation curve action 330 to generate the mask compensation curve 340. The calibration application 126 computes the mask compensation curve 340 based on a difference between the first voice response curve 310 and the second voice response curve 320. As shown by the spectral energy graph 342, the mask compensation curve 340 represents the difference in PSD over the frequency range of the respective voice response curves 310, 320. As a result, the mask compensation curve 340 is usable by the voice recognition application 124 to perform frequency compensation by adding energy to a given audio signal.

Upon generating the mask compensation curve 340, the calibration application 126 causes the mask compensation curve 340 to be stored in the local data store 128. In some embodiments, the mask compensation curve 340 is initially stored the remote device 132 as a part of a universal calibration process, such as during an initial calibration done by a mask manufacturer. In such instances, the computing device 110 can retrieve the mask compensation curve 340 from the remote device 132 and can store the mask compensation curve 340 in the local data store 128. In various embodiments, the calibration application 126 generates specific mask compensation curves 340 to correspond to specific mask types (e.g., separate mask compensation curves 340 for each brand, manufacturer, product line, etc.) to specifically compensate for the energy loss due to the specific mask type. In such instances, the voice recognition system 100 can store multiple mask compensation curves 340 in the local data store, identify the specific mask type upon detecting a vehicle occupant, and retrieve the corresponding mask compensation curve 340 from the local data store 128 for use in frequency compensation actions.

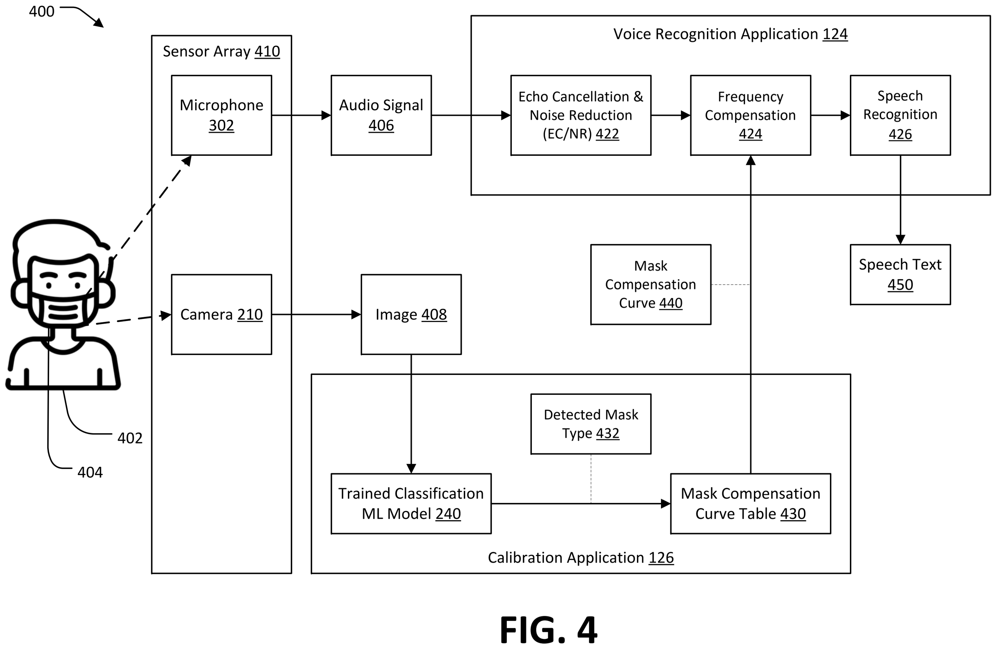

Figure 4 illustrates the voice recognition system 100 of Figure 1 generating speech text 450 from an audio signal 406 generated by a vehicle occupant 402, according to various embodiments. As shown, the operation 400 includes, without limitation, an occupant 402, a mask 404, a sensor array 410, an audio signal 406, an image 408, the calibration application 126, the voice recognition application 124, a mask compensation curve 440, and the speech text 450. The sensor array 410 includes, without limitation, the microphone 302 and the camera 210. The calibration application 126 includes, without limitation, the trained classification ML model 240, a detected mask type 432, and a mask compensation curve table 430. The voice recognition application 124 includes, without limitation, an echo cancellation and noise reduction module 422, a frequency compensation module 424, and a speech recognition module 426.

In operation, the sensor array 410 acquires sensor data associated with the occupant 402. The sensor data includes an image 408 that the calibration application 126 receives and processes. The calibration application 126 processes the image to determine that the occupant 402 is wearing the mask 404 and detects the mask type of the mask 404. Based on the detected mask type 432, the calibration application 126 retrieves a corresponding mask compensation curve and sends the mask compensation curve 440 to the voice recognition application 124. When the occupant speaks, the microphone included in the sensor array 410 acquires the speech and transmits the audio signal 406 of the speech to the voice recognition application 124. The voice recognition application 124 uses the modules 422-426 to filter, adjust, and process the audio signal 406. This includes the frequency compensation module 424 executing frequency compensation algorithms to add the energy of the mask compensation curve 440 to the audio signal 406, generating a compensated audio signal. The voice recognition application 124 executes the speech recognition module 426 to generate the speech text 450 that includes the words identified in the compensated audio signal.

In various embodiments, the camera 210 included in the sensor array 410 can acquire image data of the environment (e.g., the vehicle cabin). In such instances, the one or more visual sensors can be configured to acquire image data of one or more humans within a specific environment. For example, the camera 210 is positioned within the vehicle cabin to capture the face of the occupant 402 when the occupant 402 is seated in a specific vehicle seat. In some embodiments, the camera 210 is included in a camera array of multiple cameras, where the camera array is configured to acquire images of multiple vehicle occupants (e.g., occupants seated in a row of vehicle seats). In such instances, the sensor array 410 acquires images of the multiple vehicle occupants 402 (e.g., 402(1), 402(2), etc.) via the camera array and the calibration application 126 separately processes images data for the respective vehicle occupants.

In various embodiments, the calibration application 126 inputs the image 408 into the trained classification ML model 240. The trained classification ML model 240 has been previously trained on the training data 220 to classify images based on the presence or absence of a mask, as well as classify images based on the mask type being worn by a human in the image. The trained classification ML model 240 processes the image 408 and outputs a classification relating to the occupant 402. The classification output includes an indication of (i) whether the subject of the image (e.g., the occupant 402) is wearing a mask and (ii) if the occupant 402 is wearing a mask (e.g., the mask 404), an identification of the mask type. The identification can be exported as the detected mask type 432. In some embodiments, the detected mask type 432 comprises a label on the image 408. Additionally or alternatively, in some embodiments, the detected mask type 432 is an identification number or name that uniquely identifies the mask type. In some embodiments, the trained classification ML model 240 determines that the occupant 402 is wearing multiple masks. In such instances, the classification includes multiple detected mask types 432 (e.g., 432(1), 432(2), etc.) and the calibration application 126 identifies each of the detected mask types 432.

In various embodiments, the calibration application 126 references the mask compensation curve table 430 to retrieve the mask compensation curve 440 based on the detected mask type 432. The mask compensation curve table 430 can comprise a lookup table (LUT) that includes entries for a plurality of mask types and a plurality of corresponding mask compensation curves. For example, the calibration application 126 can use the detected mask type 432 to scan the mask compensation curve table 430 and identify a table entry that maps the detected mask type 432 to the corresponding mask compensation curve 440. In such instances, the calibration application 126 uses the table entry to retrieve the mask compensation curve 440. In some embodiments, the mask compensation curve 440 is included in the table entry within the mask compensation curve table 430. In such instances, the calibration application 126 retrieves the mask compensation curve 440 from the table entry. Alternatively, in some embodiments, the table entry includes an identification for the mask compensation curve 440 (e.g., a reference pointer to a position in the local data store 128). In such instances, the calibration application 126 uses the identification to retrieve the mask compensation curve 440. Upon retrieving the mask compensation curve 440, the calibration application 126 transmits the mask compensation curve 440 to the voice recognition application 124.

In some embodiments, when the calibration application 126 determines that the occupant 402 is not wearing any mask, the voice recognition system 100 retrieves a default compensation curve from the data store 128 via the mask compensation curve table 430. The default compensation curve, in contrasts to other mask compensation curves 340, 440, does not include any power and does not modify the spectral energy included in a signal when added to the signal. Thus, when the voice recognition application 124 applies the default compensation curve to the audio signal 406, the power spectral density of the audio signal 406 does not increase. Alternatively, in some embodiments, the calibration application 126 transmits a notification to the voice recognition application 124 in lieu of the default compensation curve. In such instances, the calibration application 126 transmits the notification indicating that the default compensation curve is unnecessary; the voice recognition application 124 can then perform speech recognition algorithms on the audio signal 406 via the speech recognition module 426 without executing the frequency compensation module 424.

In various embodiments, the microphone 302 included in the sensor array 410 acquires an audio signal 406 by recording speech made by the occupant 402. In some embodiments, the microphone 302 is included in a microphone array, where the microphone array is configured to acquire one or more audio signals 406 corresponding to one or more occupants 402. In such instances, the sensor array 410 and/or the voice recognition application 124 can combine audio data from multiple microphones 302 in the microphone array to generate the audio signal 406 and/or separately process audio signals 406 (e.g., 406(1), 406(2), etc.) that correspond to the respective occupants 402. In some embodiments, the microphone 302 acquires the audio signal 406 concurrently with the camera 210 acquiring the image 408. Alternatively, in some embodiments, the microphone 302 acquires the audio signal 406 subsequent to the camera 210 acquiring the image 408. Additionally or alternatively, the microphone 302 receives subsequent audio data. For example, the microphone 302 can initially receive a first audio signal 406(1) that includes a question spoken by the occupant 402. The microphone can then receive a second audio signal 406(2) that includes a statement spoken by the occupant 402. In such instances, the voice recognition application 124 can process the first and second audio signals 406(1)-406(2) using the same mask compensation curve 440 without additional processing by the calibration application 126.

In various embodiments, the voice recognition application 124 initially processes the audio signal 406 by executing the echo cancellation and noise reduction (EC/NR) module 422. The EC/NR module can perform various echo cancellation and/or noise reduction algorithms on the audio signal 406 to modify any noise, echoes, or other parasitic portions of the audio signal 406. In such instances, the EC/NR module 422 generates a filtered audio signal that is usable for further processing by the voice recognition application 124.

In various embodiments, the voice recognition application 124 executes the frequency compensation module 424 on the audio signal 406 (or the filtered audio signal). In such instances, the frequency compensation module 424 performs one or more frequency compensation algorithms by applying the mask compensation curve 440 to the audio signal 406. For example, the voice recognition application 124 can add the mask compensation curve 440 to the audio signal 406 to generate a compensated audio signal. Adding the mask compensation curve 440 to the audio signal 406 increases the spectral energy over one or more frequency bands of the audio signal 406. As a result, the additional energy included in the compensated audio signal increases the accuracy of the speech recognition module 426.

In various embodiments, the voice recognition application 124 executes the speech recognition module 426 to perform one or more speech recognition algorithms on the compensated audio signal. Performing the speech recognition algorithms on the compensated audio signal enables the voice recognition application 124 to identify one or more words that were included in the audio signal 406 and thus were spoken by the occupant 402. For example, the speech recognition module 426 performs one or more speech recognition algorithms to generate the speech text 450. The speech text 450 is usable for processing (e.g., keyword identification, identifying semantic meaning, etc.) from one or more modules and/or devices, such as a natural language processor. In various embodiments, the additional energy included in the compensated audio signal increases the accuracy of speech recognition, as the additional energy enables the voice recognition application 124 to process and interpret the audio signal easier and identify words within the audio signal with more accuracy.

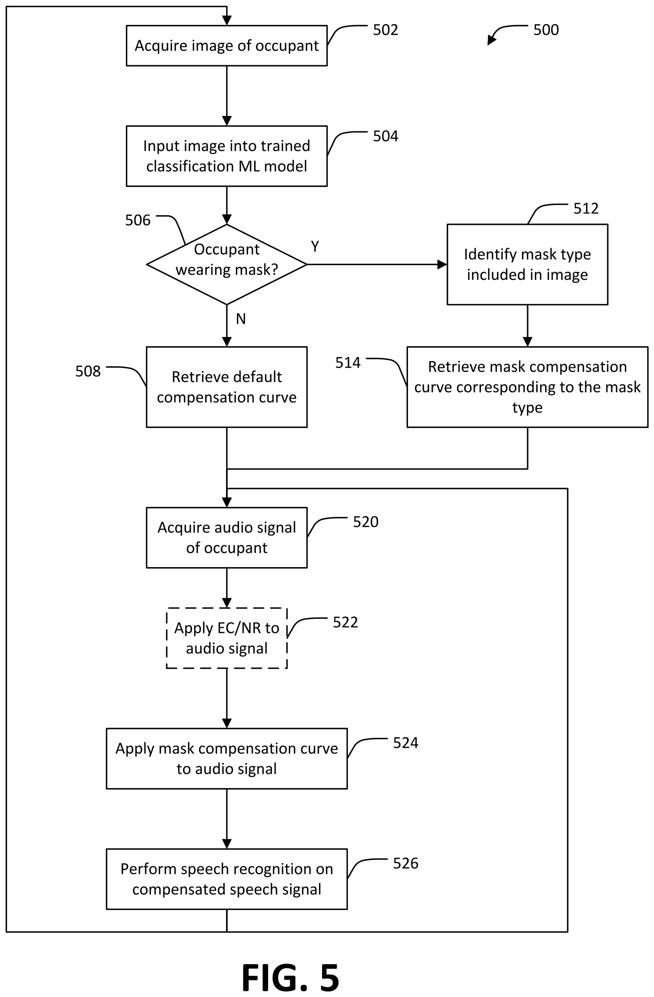

Figure 5 is a flow diagram of method steps for processing an audio signal using a compensation curve, according to various embodiments. Although the method steps are described with reference to the embodiments of Figures 1-4, persons skilled in the art will understand that any system configured to implement the method steps, in any order, falls within the scope of the present disclosure.

As shown, the method 500 begins at step 502, where the voice recognition system 100 acquires an image of an occupant. In various embodiments, one or more sensors 102 included in the voice recognition system 100 can acquire sensor data within an environment. In some embodiments, one or more visual sensors (e.g., the camera 210) included in the one or more sensors 102 can acquire image data of the environment. In such instances, the one or more visual sensors can be configured to acquire image data of one or more humans within a specific environment. For example, the voice recognition system 100 can be included in a vehicle. The voice recognition system 100 can include the camera 210 within the sensor array 410. The camera 210 is positioned within a vehicle to capture the face of a vehicle occupant (e.g., the occupant 402). In some embodiments, the camera 210 is included in a camera array of multiple cameras, where the camera array is configured to acquire images of multiple vehicle occupants. In such instances, the voice recognition system 100 acquires images of the multiple vehicle occupants via the camera array and separately processes image data for the respective vehicle occupants.

At step 504, the voice recognition system 100 inputs the image 408 into the trained classification ML model 240. In various embodiments, the calibration application 126 included in the voice recognition system 100 receives the image 408 from the sensor array 410. In such instances, the calibration application 126 inputs the image 408 into a trained classification ML model 240. The trained classification ML model 240 has been previously trained on training data 220 to classify images based on the presence or absence of a mask, as well as classify images based on the mask type being worn by a human in the image. In some embodiments, the computing device 110 that includes the calibration application 126 receives the trained classification ML model 240 from a remote device 132 via a network 130. Alternatively, in some embodiments, the calibration application 126 trains a classification ML model 230 to generate the trained classification ML model 240.

At step 506, the voice recognition system 100 determines whether the occupant 402 is wearing a mask. In various embodiments, the trained classification ML 240 included in the voice recognition system 100 processes the image 408 and outputs a classification relating to the occupant 402. The classification includes an indication of (i) whether the subject of the image (e.g., the occupant 402) is wearing a mask and (ii) if the occupant 402 is wearing a mask (e.g., the mask 404 is identified as present over the applicable area of the face of the occupant 402), an identification of the mask type (e.g., the detected mask type 432). The calibration application 126 determines whether the occupant 402 is wearing a mask by processing the classification to determine the indication of whether the occupant 402 is wearing a mask. When the calibration application 126 determines that the occupant 402 is wearing a mask, the calibration application 126 proceeds to step 512. Otherwise, the calibration application 126 determines that the occupant 402 is not wearing any mask and proceeds to step 508.

At step 508, the voice recognition system 100 retrieves the default compensation curve. In various embodiments, the calibration application 126 responds to a determination that the occupant 402 is not wearing any mask by retrieving the default compensation curve from the data store 128 via the mask compensation curve table 430 transmitting the default compensation curve to the voice recognition application 124. In such instances, the default compensation curve does not include any power and does not modify the spectral energy included in a signal when added to a signal. Thus, when the voice recognition application 124 applies the default compensation curve to an audio signal 406, the power spectral density included in the audio signal 406 does not increase. Alternatively, in some embodiments, the calibration application 126 transmits a notification to the voice recognition application 124 in lieu of the default compensation curve. In such instances, the calibration application 126 transmits the notification indicating that the default compensation curve is unnecessary; the voice recognition application 124 can then perform speech recognition algorithms on the audio signal 406 without performing frequency compensation algorithms that use a mask compensation curve (e.g., the mask compensation curve 440).

At step 512, the voice recognition system 100 identifies the mask type included in the image 408. In various embodiments, the calibration application 126 processes the classification provided by the trained classification ML model 240. When the classification indicates that the occupant 402 is wearing a mask, the classification also includes an identification of the detected mask type 432, where the detected mask type 432 corresponds to the mask 404 worn by the occupant 402. In such instances, the calibration application 126 acquires the detected mask type 432 from the classification. In some embodiments, the trained classification ML model 240 determines that the occupant 402 is wearing multiple masks. In such instances, the classification includes multiple detected mask types 432 (e.g., 432(1), 432(2), etc.) and the calibration application 126 identifies each of the detected mask types 432.

At step 514, the voice recognition system 100 retrieves the mask compensation curve 440. In various embodiments, the calibration application 126 retrieves the mask compensation curve 440 that corresponds to the detected mask type 432. In some embodiments, the calibration application 126 references the mask compensation curve table 430 to retrieve the mask compensation curve 440. For example, the calibration application 126 can refer to the mask compensation curve table 430 to identify a table entry that maps the detected mask type 432 to the corresponding mask compensation curve 440. In such instances, the calibration application 126 uses the table entry to retrieve the mask compensation curve 440. In some embodiments, the mask compensation curve 440 is included in the table entry and the calibration application 126 retrieves the mask compensation curve 440 from the table entry. Alternatively, in some embodiments, the table entry includes an identification for the mask compensation curve 440 (e.g., a reference pointer). In such instances, the calibration application 126 uses the identification to retrieve the mask compensation curve 440 from the local data store 128. Upon retrieving the mask compensation curve 440, the calibration application 126 transmits the mask compensation curve 440 to the voice recognition application 124.

At step 520, the voice recognition system 100 acquires an audio signal 406 of the occupant 402. In various embodiments, one or more sensors 102 included in the voice recognition system 100 acquires an audio signal 406 by recording speech made by the occupant 402. In some embodiments, the one or more sensors 102 comprise the microphone 302 that is included in the sensor array 410. In some embodiments, the microphone 302 is included in a microphone array, where the microphone array is configured to acquire one or more audio signals 406 corresponding to one or more occupants 402 (e.g., 402(1), 402(2)). In such instances, the voice recognition system 100 can combine audio data from multiple microphones in the microphone array to generate the audio signal and/or separately process the audio signals that correspond to the respective occupants 402. In some embodiments, the microphone 302 acquires the audio signal 406 concurrently with the camera 210 acquiring the image 408. Alternatively, in some embodiments, the microphone 302 acquires the audio signal 406 subsequent to the camera 210 acquiring the image 408.

At step 522, the voice recognition system 100 optionally applies echo cancellation and/or noise reduction on the audio signal 406. In various embodiments, the voice recognition application 124 included in the voice recognition system 100 processes the audio signal 406 received from the microphone 302 by performing echo cancellation and/or noise reduction algorithms on the audio signal 406. In such instances, the voice recognition application 124 generates a filtered audio signal that is usable for further processing by the voice recognition application 124.

At step 524, the voice recognition system 100 applies the mask compensation curve 440 to the audio signal 406. In various embodiments, the voice recognition application 124 executes one or more frequency compensation algorithms by applying the mask compensation curve 440 to the audio signal 406 or the filtered audio signal. For example, the voice recognition application 124 can add the mask compensation curve 440 to the audio signal 406 to increase the spectral energy over one or more frequency ranges of the audio signal 406. As a result, the voice recognition application 124 applying the mask compensation curve to the audio signal 406 or the filtered audio signal generates a compensated audio signal that is usable for speech recognition.

At step 526, the voice recognition system 100 performs speech recognition on the compensated speech signal. In various embodiments, the voice recognition application 124 executes one or more speech recognition algorithms on the compensated audio signal to identify one or more words that were included in the original audio signal 406. For example, the voice recognition application 124 executes one or more speech recognition algorithms to generate speech text 450 that is usable for processing (e.g., keyword identification, identifying semantic meaning, etc.) from one or more modules and/or devices, such as a natural language processor. In various embodiments, the additional energy included in the compensated audio signal increases the accuracy of speech recognition, as the additional energy enables the voice recognition application 124 to process and interpret the audio signal easier and identify words within the audio signal with more accuracy. Upon performing the speech recognition, the voice recognition system can optionally return to step 502 to acquire a subsequent image of the occupant 402 or can optionally return to step 520 to acquire a subsequent audio signal of the occupant 402.

In sum, a voice recognition system includes a voice recognition application and a calibration application. The calibration application includes a trained classification ML model that is trained to process an input image and determine a mask type worn by an occupant. The calibration application also includes a mask compensation curve table that maps various mask types to a corresponding compensation curve. The compensation curve is an energy curve that is usable to combine with a speech signal to compensate for energy losses in the speech signal received by the voice recognition system over multiple frequency languages due to a mask muffling the speech signal.

When an occupant speaks, a microphone included in the voice recognition system acquires and transmits an audio signal of the user to the voice recognition application. A camera acquires and transmits an image of the occupant to the calibration application. The trained classification ML model processes the image and determines whether the occupant is wearing a mask and, if so, which mask type the occupant is wearing. The calibration application uses the detected mask type to retrieve and transmit a corresponding compensation curve to the voice recognition application. The voice recognition application applies the compensation curve to the audio signal to generate a compensated audio signal, where the compensated audio signal includes more energy due to the addition of the compensation curve. The voice recognition application then performs speech recognition on the compensated audio signal to generate speech text, where the speech text is usable to perform operations based on the contents of the speech text.

At least one technical advantage of the disclosed techniques relative to the prior art is that, with the disclosed techniques, a virtual personal assistant can process the speech of vehicle occupants more accurately when the occupant is wearing an article of clothing that muffles their speech. In particular, by incorporating a calibration application that processes images to identify a specific mask type worn by the occupant, the virtual personal assistant can apply energy in specific frequency ranges based on the specific mask type. In this manner, the compensated speech is easier for the virtual personal assistant to process accurately, generating speech text that the virtual personal assistant can process with greater accuracy. Consequently, the virtual personal assistant responds to the speech of a mask wearing occupant with more accuracy and does not require the virtual personal assistant to be specifically trained to recognize the speech of a mask wearer or require the occupant to remove their mask when speaking. These technical advantages represent one or more technological advancements over prior art approaches.
1. In various embodiments, a computer-implemented method comprises determining, by a voice recognition system included in a vehicle, a mask type of a mask worn by an occupant of the vehicle, acquiring a compensation curve corresponding to the mask type, acquiring an audio signal of the occupant speaking, and applying the compensation curve to the audio signal to generate a compensated audio signal.
2. The computer-implemented method of clause 1, further comprising performing speech recognition on the compensated audio signal to generate speech text.
3. The computer-implemented method of clause 1 or 2, further comprising acquiring an image of the occupant of a vehicle, where determining the mask type is based on the image of the occupant.
4. The computer-implemented method of any of clauses 1-3, where determining the mask type comprises inputting the image into a trained classification machine learning (ML) model that outputs an identification of the mask type.
5. The computer-implemented method of any of clauses 1-4, further comprising training an image classification ML model with a plurality of images to generate the trained classification ML model, where each image included in the plurality of images includes a human wearing at least one mask type of a plurality of mask types.
6. The computer-implemented method of any of clauses 1-5, further comprising receiving the trained classification ML model from a remote device.
7. The computer-implemented method of any of clauses 1-6, where applying the compensation curve to the audio signal increases a power spectral density for the compensated audio signal.
8. The computer-implemented method of any of clauses 1-7, where acquiring the compensation curve comprises using a lookup table to identify a mapping that includes the mask type, identifying the compensation curve included in the mapping, and retrieving the compensation curve from a local data store.
9. The computer-implemented method of any of clauses 1-8, further comprising generating the compensation curve corresponding to the mask type by acquiring, by a calibration application, a first calibration audio signal of a user when the user is not wearing the mask, where the user is a human or a humanoid testing device, acquiring, by the calibration application, a second calibration audio signal of the user when the user is wearing the mask, and generating the compensation curve based on a difference between the first calibration audio signal and the second calibration audio signal.
10. The computer-implemented method of any of clauses 1-9, further comprising performing at least one of an echo cancellation action or a noise reduction action on the audio signal before applying the compensation curve.
11. In various embodiments, one or more non-transitory computer-readable media store instructions that, that, when executed by one or more processors of a voice recognition system, cause the one or more processors to perform the steps of determining a mask type of a mask worn by a first occupant of a vehicle, acquiring a compensation curve corresponding to the mask type, acquiring an audio signal of the first occupant speaking, and applying the compensation curve to the audio signal to generate a compensated audio signal.
12. The one or more non-transitory computer-readable media of clause 11, the steps further comprising determining that the first occupant is wearing a second mask, determining a second mask type of the second mask, and acquiring a second compensation curve corresponding to the second mask type, where the compensated audio signal is generated by applying both the compensation curve and the second compensation curve to the audio signal.
13. The one or more non-transitory computer-readable media of clause 11 or 12, the steps further comprising determining that a second occupant is not wearing any mask, in response to determining that the second occupant is not wearing any mask, acquiring a default compensation curve, wherein the default compensation curve does not increase a power spectral density when added to a signal, acquiring a second audio signal of the second occupant speaking, and applying the default compensation curve to the second audio signal.
14. The one or more non-transitory computer-readable media of any of clauses 11-13, the steps further comprising performing speech recognition on the compensated audio signal to generate speech text.
15. The one or more non-transitory computer-readable media of any of clauses 11-14, the steps further comprising acquiring an image of the first occupant of the vehicle, where determining the mask type is based on the image of the first occupant, and inputting the image into a trained classification machine learning (ML) model that outputs an identification of the mask type.
16. The one or more non-transitory computer-readable media of any of clauses 11-15, the steps further comprising training an image classification ML model with a plurality of images to generate the trained classification ML model, where each image included in the plurality of images includes a human wearing at least one mask type of a plurality of mask types.
17. The one or more non-transitory computer-readable media of any of clauses 11-16, the steps further comprising receiving, by the training classification ML model from a remote device.
18. The one or more non-transitory computer-readable media of any of clauses 11-17, where applying the compensation curve to the audio signal increases a power spectral density for the compensated audio signal.
19. The one or more non-transitory computer-readable media of any of clauses 11-18, where acquiring the compensation curve comprises using a lookup table to identify a mapping that includes the mask type, identifying the compensation curve included in the mapping, and retrieving the compensation curve from a local data store.
20. In various embodiments, a system comprises a memory storing instructions for a voice recognition system, and a processor coupled to the memory that implements the voice recognition system by performing the steps of determining, by the voice recognition system, a mask type of a mask worn by an occupant of the vehicle, acquiring a compensation curve corresponding to the mask type, acquiring an audio signal of the occupant speaking, and applying the compensation curve to the audio signal to generate a compensated audio signal.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

### FURTHER EXAMPLES

Example 1. A computer-implemented method comprising: determining, by a voice recognition system included in a vehicle, a mask type of a mask worn by an occupant of the vehicle; acquiring a compensation curve corresponding to the mask type; acquiring an audio signal of the occupant speaking; and applying the compensation curve to the audio signal to generate a compensated audio signal.

Example 2. The computer-implemented method of example 1, further comprising: performing speech recognition on the compensated audio signal to generate speech text.

Example 3. The computer-implemented method of example 1 or 2, further comprising: quiring an image of the occupant of a vehicle, wherein determining the mask type is based on the image of the occupant.

Example 4. The computer-implemented method of example 3, wherein determining the mask type comprises inputting the image into a trained classification machine learning (ML) model that outputs an identification of the mask type.

Example 5. The computer-implemented method of example 4, further comprising: training an image classification ML model with a plurality of images to generate the trained classification ML model; wherein each image included in the plurality of images includes a human wearing at least one mask type of a plurality of mask types.

Example 6. The computer-implemented method of example 4 or 5, further comprising: receiving the trained classification ML model from a remote device.

Example 7. The computer-implemented method of any of examples 1 to 6, wherein applying the compensation curve to the audio signal increases a power spectral density for the compensated audio signal.

Example 8. The computer-implemented method of any of examples 1 to 7, wherein acquiring the compensation curve comprises: using a lookup table to identify a mapping that includes the mask type; identifying the compensation curve included in the mapping; and retrieving the compensation curve from a local data store.

Example 9. The computer-implemented method of any of examples 1 to 8, further comprising generating the compensation curve corresponding to the mask type by: acquiring, by a calibration application, a first calibration audio signal of a user when the user is not wearing the mask, wherein the user is a human or a humanoid testing device; acquiring, by the calibration application, a second calibration audio signal of the user when the user is wearing the mask; and generating the compensation curve based on a difference between the first calibration audio signal and the second calibration audio signal.

Example 10. The computer-implemented method of any of examples 1 to 9, further comprising: performing at least one of an echo cancellation action or a noise reduction action on the audio signal before applying the compensation curve.

Example 11. One or more non-transitory computer-readable media storing instructions that, that, when executed by one or more processors of a voice recognition system, cause the one or more processors to perform the steps of: determining a mask type of a mask worn by a first occupant of a vehicle; acquiring a compensation curve corresponding to the mask type; acquiring an audio signal of the first occupant speaking; and applying the compensation curve to the audio signal to generate a compensated audio signal.

Example 12. The one or more non-transitory computer-readable media of example 11, the steps further comprising: determining that the first occupant is wearing a second mask; determining a second mask type of the second mask; and acquiring a second compensation curve corresponding to the second mask type, wherein the compensated audio signal is generated by applying both the compensation curve and the second compensation curve to the audio signal.

Example 13. The one or more non-transitory computer-readable media of example 11 or 12, the steps further comprising: determining that a second occupant is not wearing any mask; in response to determining that the second occupant is not wearing any mask, acquiring a default compensation curve, wherein the default compensation curve does not increase a power spectral density when added to a signal; acquiring a second audio signal of the second occupant speaking; and applying the default compensation curve to the second audio signal.

Example 14. The one or more non-transitory computer-readable media of any of examples 11 to 13, the steps further comprising: performing speech recognition on the compensated audio signal to generate speech text.

Example 15. The one or more non-transitory computer-readable media of any of examples 11 to 14, the steps further comprising: acquiring an image of the first occupant of the vehicle, wherein determining the mask type is based on the image of the first occupant; and inputting the image into a trained classification machine learning (ML) model that outputs an identification of the mask type.

Example 16. The one or more non-transitory computer-readable media of example15, the steps further comprising: training an image classification ML model with a plurality of images to generate the trained classification ML model; wherein each image included in the plurality of images includes a human wearing at least one mask type of a plurality of mask types.

Example 17. The one or more non-transitory computer-readable media of example 15 or 16, the steps further comprising: receiving, by the training classification ML model from a remote device.

Example 18. The one or more non-transitory computer-readable media of any of examples 11 to 17, wherein applying the compensation curve to the audio signal increases a power spectral density for the compensated audio signal.

Example 19. The one or more non-transitory computer-readable media of any of examples 11 to 18, wherein acquiring the compensation curve comprises: using a lookup table to identify a mapping that includes the mask type; identifying the compensation curve included in the mapping; and retrieving the compensation curve from a local data store.

Example 20. A system comprising: a memory storing instructions for a voice recognition system; and a processor coupled to the memory that implements the voice recognition system by performing the steps of: determining, by the voice recognition system, a mask type of a mask worn by an occupant of the vehicle; acquiring a compensation curve corresponding to the mask type; acquiring an audio signal of the occupant speaking; and applying the compensation curve to the audio signal to generate a compensated audio signal.

## Claims

1. A computer-implemented method comprising:
determining, by a voice recognition system included in a vehicle, a mask type of a mask worn by an occupant of the vehicle;
acquiring a compensation curve corresponding to the mask type;
acquiring an audio signal of the occupant speaking; and
applying the compensation curve to the audio signal to generate a compensated audio signal.

2. The computer-implemented method of claim 1, further comprising:
performing speech recognition on the compensated audio signal to generate speech text.

3. The computer-implemented method of claim 1 or 2, further comprising:
acquiring an image of the occupant of a vehicle, wherein determining the mask type is based on the image of the occupant.

4. The computer-implemented method of claim 3, wherein determining the mask type comprises inputting the image into a trained classification machine learning (ML) model that outputs an identification of the mask type.

5. The computer-implemented method of claim 4, further comprising:
training an image classification ML model with a plurality of images to generate the trained classification ML model;
wherein each image included in the plurality of images includes a human wearing at least one mask type of a plurality of mask types.

6. The computer-implemented method of claim 4 or 5, further comprising:
receiving the trained classification ML model from a remote device.

7. The computer-implemented method of any preceding claim, wherein applying the compensation curve to the audio signal increases a power spectral density for the compensated audio signal.

8. The computer-implemented method of any preceding claim, wherein acquiring the compensation curve comprises:
using a lookup table to identify a mapping that includes the mask type;
identifying the compensation curve included in the mapping; and
retrieving the compensation curve from a local data store.

9. The computer-implemented method of any preceding claim, further comprising generating the compensation curve corresponding to the mask type by:
acquiring, by a calibration application, a first calibration audio signal of a user when the user is not wearing the mask, wherein the user is a human or a humanoid testing device;
acquiring, by the calibration application, a second calibration audio signal of the user when the user is wearing the mask; and
generating the compensation curve based on a difference between the first calibration audio signal and the second calibration audio signal.

10. The computer-implemented method of any preceding claim, further comprising:
performing at least one of an echo cancellation action or a noise reduction action on the audio signal before applying the compensation curve.

11. One or more non-transitory computer-readable media storing instructions that, that, when executed by one or more processors of a voice recognition system, cause the one or more processors to perform the steps of:
determining a mask type of a mask worn by a first occupant of a vehicle;
acquiring a compensation curve corresponding to the mask type;
acquiring an audio signal of the first occupant speaking; and
applying the compensation curve to the audio signal to generate a compensated audio signal.

12. The one or more non-transitory computer-readable media of claim 11, the steps further comprising:
determining that the first occupant is wearing a second mask;
determining a second mask type of the second mask; and
acquiring a second compensation curve corresponding to the second mask type, wherein the compensated audio signal is generated by applying both the compensation curve and the second compensation curve to the audio signal.

13. The one or more non-transitory computer-readable media of claim 11 or 12, the steps further comprising:
determining that a second occupant is not wearing any mask;
in response to determining that the second occupant is not wearing any mask, acquiring a default compensation curve, wherein the default compensation curve does not increase a power spectral density when added to a signal;
acquiring a second audio signal of the second occupant speaking; and
applying the default compensation curve to the second audio signal.

14. The one or more non-transitory computer-readable media of any of claims 11 to 13, the steps further comprising:
performing speech recognition on the compensated audio signal to generate speech text.

15. A system comprising:
a memory storing instructions for a voice recognition system; and
a processor coupled to the memory that implements the voice recognition system by performing the steps of:
determining, by the voice recognition system, a mask type of a mask worn by an occupant of the vehicle;
acquiring a compensation curve corresponding to the mask type;
acquiring an audio signal of the occupant speaking; and
applying the compensation curve to the audio signal to generate a compensated audio signal.
